# EUROPÄISCHE PATENTSCHRIFT

(11) **EP 0 740 407 B1**
(45) Veröffentlichungstag und Bekanntmachung des Hinweises auf die Patenterteilung: **06.05.1998**
(21) Anmeldenummer: 96100607.9
(22) Anmeldetag: 17.01.1996
(51) Int. Cl.: H02P 3/12, H02P 3/08

(54) **Bremseinrichtung für einen Reihenschluss-Kommutatormotor**
Braking device for a series commutator motor
Dispositif de freinage pour un moteur série à commutateur

(30) Priorität: 26.04.1995 DE 19515335
(43) Veröffentlichungstag der Anmeldung: 30.10.1996
(73) Patentinhaber: FESTO Tooltechnic GmbH & Co., 73728 Esslingen (DE)
(72) Erfinder: Asmus, Torsten, Dipl.-Ing. (FH), D-73728 Esslingen (DE); Maier, Frank, Dipl.-Ing. (FH), D-72622 Nürtingen (DE)
(74) Vertreter: Vetter, Hans, Dipl.-Phys. Dr.

(56) Entgegenhaltungen:
- EP-A- 0 326 146
- DE-A- 4 240 972
- US-A- 4 751 414

## Beschreibung

Die Erfindung betrifft eine Bremseinrichtung für einen Reihenschluß-Kommutatormotor nach dem Oberbegriff des Anspruchs 1.

Bei einer derartigen, aus der EP-A-0 326 146 bekannten Bremseinrichtung sind die beiden Feldwicklungen im Bremsbetrieb parallel geschaltet. Durch einen Abgriff an der umgepolten Feldwicklung wird deren Stromfluß durch Eingriff in den Stromkreis der parallelen anderen Feldwicklung eingestellt. Der tatsächlich fließende Bremsstrom kann bei dieser Anordnung daher nur indirekt durch den Stromfluß in einem der beiden Zweige erfaßt werden.

Bei einer weiteren aus der DE 42 40 972 A1 bekannten Bremseinrichtung besteht ein Nachteil darin, daß ein relativ hoher Strom durch den als Transistor ausgebildeten steuerbaren Widerstand fließen kann, der eine entsprechende Kühlung erforderlich macht. Zusätzlich muß ein für hohe Ströme ausgelegter Transistor eingesetzt werden, der insgesamt zu relativ hohen Kosten führt.

Die Aufgabe der vorliegenden Erfindung besteht darin, eine Bremseinrichtung gemäß dem Oberbegriff des Anspruchs 1 so zu verbessern, daß der maximal durch den Anker fließende Bremsstrom sicher und exakter begrenzt werden kann.

Diese Aufgabe wird erfindungsgemäß durch die Merkmale des Anspruches 1 gelöst.

Durch die Reihenschaltung der beiden Feldwicklungen und durch den in den Bremsstromkreis geschalteten Meßwiderstand kann der tatsächlich fließende Bremsstrom sehr exakt erfaßt werden und die erfindungsgemäße Strombegrenzungseinrichtung exakt gesteuert werden. Da der ohmsche Anteil der zweiten Feldwicklung beim Bremsen zur Energievernichtung beiträgt, kann der vorzugsweise als Transistor beziehungsweise FET ausgebildete steuerbare Widerstand leistungs- und verlustarm ausgebildet werden. Da die beiden Feldwicklungen symmetrisch zum Anker verschaltbar sind, kann die Entstörung einfacher mit geringeren Mitteln erfolgen. Auch die Wirkungen der Strombegrenzungseinrichtungen können unmittelbar durch den Meßwiderstand erfaßt werden, also die Auswirkungen der Veränderung des Widerstandswerts im überbrückungszweig und/oder im die zweite Feldwicklung enthaltenden parallelen Teilbereich, da der Gesamtstrom durch diesen Meßwiderstand fließt.

Durch die in den Unteransprüchen aufgeführten Maßnahmen sind vorteilhafte Weiterbildungen und Verbesserungen der im Anspruch 1 angegebenen Bremseinrichtung möglich Als Strommeßeinrichtung eignet sich vor allem ein in den Bremsstromkreis geschalteter Meßwiderstand, wobei die Strombegrenzungseinrichtung vorzugsweise eine Vergleichseinrichtung zum Vergleich des gemessenen Bremsstroms mit einem Sollwert aufweist.

Um eine bessere und sichere Bremseinleitung zu erreichen, ist zur Starterregung in vorteilhafter Weise ein im Motorbetrieb über wenigstens eine Ladediode ladbarer und im Bremsbetrieb über wenigstens die erste Feldwicklung entladbarer Kondensator vorgesehen. Dieser Kondensator überbrückt in einer zweckmäßigen Ausgestaltung den Anker und wenigstens einen Teil des Überbrückungszweigs.

In einer bevorzugten Ausgestaltung ist der steuerbare Widerstand im Überbrückungszweig angeordnet, so daß im einen Fall (Widerstandswert gegen Null) der wesentlichste Teil des Stroms durch den Überbrückungszweig fließt und die volle Bremswirkung erreicht wird, während im anderen Fall (Widerstandswert gegen unendlich), der gesamte Bremsstrom durch die zweite Feldwicklung fließt, so daß sich die Wirkungen der beiden Feldwicklungen kompensieren und keine wesentliche Bremswirkung mehr eintritt.

In einer zweckmäßigen Ausgestaltung ist eine durch den Kondensator und/oder den Bremsstrom gespeiste Spannungsquelle für die Strombegrenzungseinrichtung vorgesehen, die insbesondere eingangsseitig durch die an der Reihenschaltung von Strommeßeinrichtung und steuerbarem Widerstand abgegriffenen Spannung beaufschlagt ist, und einen Kondensator enthält, der insbesondere in Reihe zu einer Ladediode geschaltet ist. Dieser Kondensator wird durch den Kondensator für die Starterregung bei Auslösung des Bremsvorgangs aufgeladen, so daß sofort Versorgungsenergie für die Strombegrenzungseinrichtung zur Verfügung steht.

Um die Spannungsversorgung über den gesamten Bremsvorgang sicher aufrechtzuerhalten, wird der steuerbare Widerstand zum periodischen Aufladen des Kondensators der Spannungsquelle mit die eigentliche Stromregelung kaum beeinträchtigenden Impulsen getaktet.

Um eine möglichst konstante Versorgungsspannung zu erzielen, weist die Spannungsquelle eine parallel zur ihrem Kondensator geschaltete Reihenschaltung einer Z-Diode mit einem Widerstand auf.

Zur Festlegung der Stromrichtung und zur Aufladung des Kondensators für die Starterregung während des Motorbetriebs ist im Überbrückungszweig und im dazu parallelen Teilbereich des Bremsstromkreises jeweils eine Diode geschaltet.

Zur sicheren Umschaltung zwischen Motorbetrieb und Bremsbetrieb bei gleichzeitiger Umpolung der ersten Feldwicklunq dient eine Umschalteinrichtung, die aus zwei Umschaltern an den beiden Anschlüssen der ersten Feldwicklung besteht.

Ausführungsbeispiele der Erfindung sind in der Zeichnung dargestellt und in der nachfolgenden Beschreibung näher erläutert. Es zeigen:
- Figur 1: ein Schaltbild einer ersten Bremseinrichtung in einer prinzipiellen Darstellung,
- Figur 2: ein Schaltbild eines ersten Ausführungsbeispiels mit einem Thyristor als Vergleichseinrichtung und
- Figur 3: ein zweites Ausführungsbeispiel mit einem Komparator als Vergleichseinrichtung.

Ein Reihenschluß-Kommutatormotor besteht aus einem Anker 10 und zwei Feldwicklungen 11, 12 und ist im Motorbetrieb mit zwei Anschlußklemmen 13, 14 verbunden, die von einer Versorgungsspannung Uv beaufschlagt sind. Dabei ist ein Anschluß der ersten Feldwicklung 11 über einen ersten Umschalter 15 mit der Anschlußklemme 13 und der andere Anschluß über einen zweiten Umschalter 16 mit dem Anker 10 verbunden, dessen zweiter Anschluß über die zweite Feldwicklung 12 mit der Anschlußklemme 14 verbunden ist. Die beiden Umschalter 15, 16 bilden zusammen eine synchronschaltende Umschalteinrichtung, deren Schaltkontakte über Motorbetrieb die beschriebene Schaltstellung einnehmen, während sie nach dem Ausschalten des Motors im Bremsbetrieb die dargestelte Schaltstellung einnehmen.

Im Bremsbetrieb ist die erste Feldwicklung 11 über den ersten Umschalter 15 mit dem Anker 10 verbunden, dessen zweiter Anschluß über die Reihenschaltung der zweiten Feldwicklung 12 mit einer Diode 17 und einem schematisch dargestellten steuerbaren Widerstand 18 mit dem zweiten Umschalter 16 verbunden ist, der die Verbindung zur ersten Feldwicklung 11 herstellt. Im Bremsbetrieb wird somit ein geschlossener Bremsstromkreis gebildet, der aus dem Anker 10, den beiden Feldwicklungen 11, 12, der Diode 17 und dem steuerbaren Widerstand 18 besteht, wobei durch die Umschalter 15, 16 nunmehr die beiden Feldwicklungen 11, 12 bezüglich ihrer Felder gegensinnig gepolt sind. Der erste Umschalter 15 bewirkt gleichzeitig eine Abtrennung von der Versorgungsspannung Uv.

Parallel zu dem aus der zweiten Feldwicklung 12, der Diode 17 und dem steuerbaren Widerstand 18 bestehenden Teilbereich 19 des geschlossenen Bremsstromkreises ist ein aus einer zweiten Diode 20 und einem in Reihe dazugeschalteten zweiten steuerbaren Widerstand 21 bestehender Überbrückungszweig 22 geschaltet. Parallel zur Reihenschaltung des Ankers 10 mit dem Überbrückungszweig 22 bzw. dem Teilbereich 19 ist ein Kondensator 23 geschaltet.

Die beiden steuerbaren Widerstände 18 und 21 sind durch schematisch dargestellte steuerbare Schalter symbolisiert, bei daran es sich auch um Halbleiterschalter, wie Transistoren, FET oder dergleichen handeln kann.

Im Motorbetrieb besitzt wenigstens einer der beiden steuerbaren Widerstände 18, 21 einen gegen Null gehenden Widerstand, d.h., der entsprechende Schalter ist geschlossen. Der Kondensator 23 wird daher im Motorbetrieb über die Diode 17 oder die Diode 20 geladen.

Zum Bremsen des Motors werden die Umschalter 15, 16 in die dargestellte Schaltstellung gelegt, so daß die gesamte Schaltungsanordnung von der Versorgungs Uv einpolig abgetrennt ist. Der Kondensator 23 entlädt sich über die erste Feldwicklung 11, wodurch eine Felderregung stattfindet und im Anker 10 eine Spannung induziert wird, die zu einem Bremsstrom I_{B} führt. Zu diesem Zeitpunkt ist der steuerbare Widerstand 21 stromleitend und der steuerbare Widerstand 18 sperrt. Durch die zweite Feldwicklung 12 fließt daher kein Strom, und es liegt eine maximale Bremsfelderregung. d.h, eine maximale Bremswirkung vor. Erreicht der Bremsstrom I_{B} einen vorgebbaren Maximalwert, so sperrt der steuerbare Widerstand 21 und der steuerbare Widerstand 18 leitet. Nun fließt der gesamte Bremsstrom I_{B} durch die zweite Feldwicklung 12, so daß das Bremsfeld der ersten Feldwicklung 11 vollständig kompensiert wird. Die Bremswirkung wird dadurch aufgehoben. Sinkt dann der Bremsstrom wieder ab, so kann die Bremswirkung durch Umsteuern der beiden steuerbaren Widerstände 18, 21 wieder hergestellt werden. Durch dieses Wechselspiel wird der Bremsstrom I_{B} auf den vorgebbaren Maximalwert begrenzt.

Durch Variation des prozentualen Anteils des Stroms durch die zweite Feldwicklung 12 am gesamten Bremsstrom durch zeitliches Umsteuern der steuerbaren Widerstände 18, 21 kann somit die Größe des Bremsstroms I_{B} beeinflußt bzw. eingestellt werden. Hierzu sind auch Zwischen-Schaltpositionen der steuerbaren Widerstände 18, 21 möglich, z.B. indem beide steuerbaren Widerstände 18, 21 vollständig stromleitend sind (Widerstandswert gegen Null). Dann fließt nur ein Teilstrom durch die zweite Feldwicklung 12 und das Bremsfeld der ersten Feldwicklung 11 wird nur teilweise kompensiert, so daß eine verringerte, von Null verschiedene Bremswirkung eintritt.

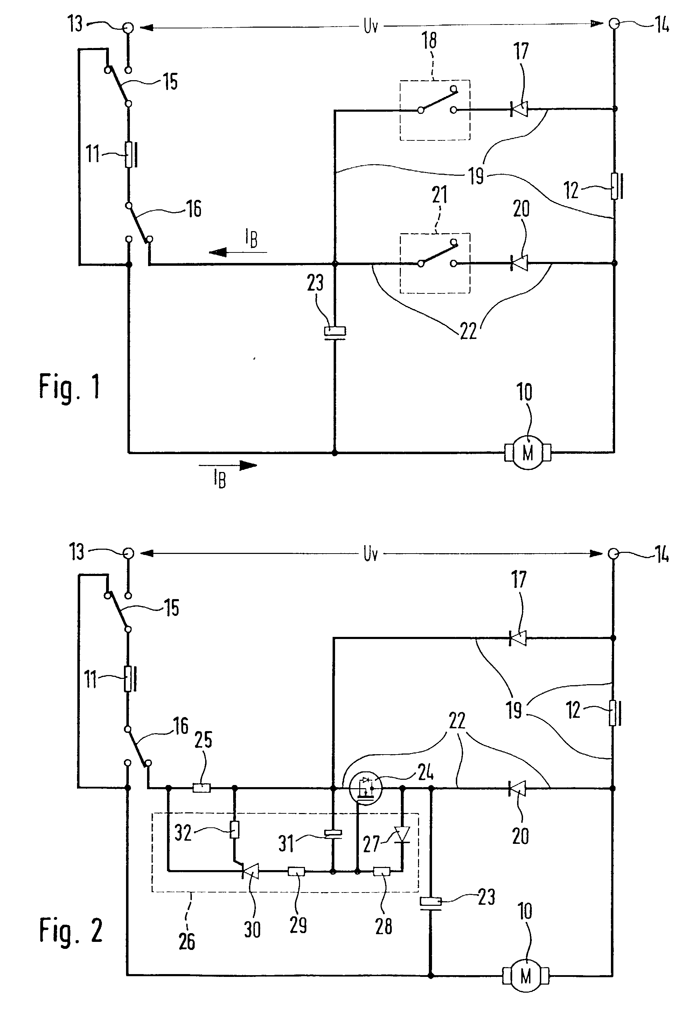

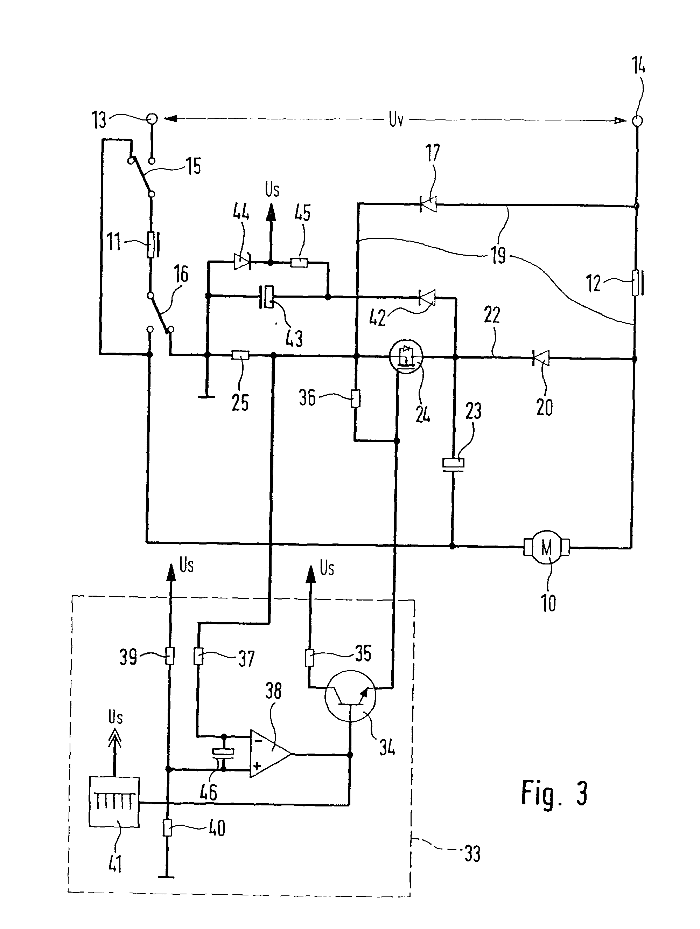

Prinzipiell kann auch nur ein steuerbarer Widerstand entweder im Teilbereich 19 des geschlossenen Bremsstromkreises oder im Überbrückungszweig 22 vorgesehen sein. Der Wegfall des ersten steuerbaren Widerstands 18 wird durch die in den Figuren 2 und 3 dargestellten Ausführungsbeispiele demonstriert. Bei einem Wegfall des zweiten steuerbaren Widerstands 21 müßte ein Festwiderstand in den Überbrückungszweig 22 geschaltet werden.

Das in Figur 2 dargestellte erste Ausführungsbeispiel entspricht weitgehend der Bremseinrichtung gemäß Fig. 1, so daß gleiche oder gleichwirkende Bauteile mit den selben Bezugszeichen versehen und nicht nochmals beschrieben sind. Im Unterschied zum ersten Ausführungsbeispiel ist der zweite steuerbare Widerstand 21 durch einen FET 24 ersetzt. Der erste steuerbare Widerstand 18 entfällt. Der Kondensator 23 ist parallel zur Reihenschaltung des Ankers 10 mit der zweiten Diode 20 geschaltet. Zwischen dem Verknüpfungspunkt zwischen den Teilbereich 19 und dem Überbrückungszweig 22 einerseits und dem zweiten Umschalter 16 andererseits ist ein Strommeßwiderstand 25 geschaltet.

Zur Steuerung bzw. Taktung des FET 24 dient eine Strombegrenzungseinrichtung 26. Dabei ist der Drain-Anschluß des FET 24 über die Reihenschaltung einer Diode 27 mit einem Widerstand 28 an das Gate angeschlossen, das über einen weiteren Widerstand 29 mit der Anode eines Thyristors 30 verbunden ist. Die Gate-Source-Strecke des FET 24 ist durch einen Kondensator 31 gepuffert Das Gate des Thyristors 30 ist über einen Widerstand 32 an den einen Anschluß des Strommeßwiderstands 25 angeschlossen, dessen zweiter Anschluß mit der Kathode dieses Thyristors 30 verbunden ist.

Das Umsteuern der Umschalter 15, 16 und das Prinzip der Bremsung entsprechen denen der Bremseinrichtung gemäß Fig. 1. Zu Beginn der Bremsung muß der FET 24 stromleitend sein, damit der Bremsvorgang sicher eingeleitet wird. Der Kondensator 23 kann sich dadurch wiederum über die erste Feldwicklung 11 zur Starterregung entladen. Die Starterregung treibt den Ankerstrom I_{B}, was wiederum die Bremsfelderregung vergrößert. Ein geringer Teil des Bremsstroms fließt dabei auch über die zweite Feldwicklung 12.

Die Strombegrenzungseinrichtung 26 regelt den Bremsstrom I_{B} wie folgt: Zunächst ist der FET 24 stromleitend, da er vom geladenen Kondensator 23 angesteuert wird. Der Bremsstrom I_{B} wird durch den Strommeßwiderstand 25 gemessen. Übersteigt dieser Strom einen mittels des Strommeßwiderstands 25 einstellbaren Sollwert, so wird der Spannungsabfall über dem Strommeßwiderstand 25 gleich der Zündspannung des Thyristors 30, der dadurch stromleitend wird. Der Kondensator 31 und die Gate-Kapazität des FET 24 werden dadurch über den Widerstand 29 und den Thyristor 30 entladen, wodurch der FET 24 in den sperrenden Zustand übergeht. Der Bremsstrom fließt nun über die zweite Feldwicklung 12, wodurch diese das Bremsfeld der ersten Feldwicklung 11 schwächt bzw. kompensiert. Hierdurch sinkt der Bremsstrom oder steigt nicht mehr weiter an. Der FET 24 wird folgendermaßen wieder in den leitenden Zustand gesteuert: Unterschreitet der Entladestrom durch den Thyristor 30 nach Ablauf eines bestimmten Zeitintervalls den Mindeshaltestromwert dieses Thyristors 30, so sperrt er. Der Kondensator 31 wird nun über den Widerstand 28 und die Diode 27 geladen, so daß der FET 24 ab einem bestimmten Ladezustand wieder in den leitenden Zustand gesteuert wird. Ein erneutes Sperren erfolgt in der bereits beschriebenen Weise bei Überschreitung des Sollwerts durch den Bremsstrom I_{B}.

Das in Figur 3 dargestellte zweite Ausführungsbeispiel entspricht wiederum weitgehend dem ersten Ausführungsbeispiel, so daß gleiche oder gleichwirkende Bauteile mit den selben Bezugszeichen versehen und nicht nochmals beschrieben sind. Beim zweiten Ausführungsbeispiel ist die Strombegrenzungseinrichtung 26 durch eine Strombegrenzungseinrichtung 33 ersetzt, deren Regelvorgang nach Art eines reinen Zweipunktreglers abläuft. Dabei ist das Gate des FET 24 über die Reihenschaltung der Schaltstrecke eines Transistors 34 mit einem Widerstand 35 an eine Versorgungsspannung Us gelegt. Die Gate-Source-Strecke des FET 24 ist durch einen Pull-Down-Widerstand 36 überbrückt. Weiterhin ist der Source-Anschluß des FET 24 über einen Widerstand 37 an einen Eingang eines Komparators 38 gelegt, dessen Vergleichseingang mit dem Abgriff eines aus zwei Widerständen 39, 40 bestehenden Spannungsteilers verbunden ist, an den die Versorgungsspannung Us angelegt ist. Die beiden Eingänge des Komparators 38 sind durch einen Kondensator 46 überbrückt, und der Ausgang ist mit der Basis des Transistors 34 verbunden. Der Ausgang eines ebenfalls von der Versorgungsspannung Us versorgten Impulsgenerators 41 ist ebenfalls an die Basis des Transistors 34 angeschlossen.

Die die Versorgungsspannung Us erzeugende Versorgungsspannungsquelle weist einen über eine Diode 42 ladbaren Kondensator 43 auf, wobei die Reihenschaltung der Diode 42 mit dem Kondensator 43 parallel zur Reihenschaltung der Schaltstrecke des FET 24 mit dem Strommeßwiderstand 25 liegt. Parallel zu Kondensator 43 ist die Reihenschaltung einer Z-Diode 44 mit einem Widerstand 45 geschaltet. An der Z-Diode 44 kann die Versorgungsspannung Us abgegriffen werden.

Die Strombegrenzungseinrichtung 33 regelt den Bremsstrom nach Art eines reinen Zweipunktreglers. Nach der Auslösung des Bremsvorgangs durch Betätigung der Umschalter 15, 16 wird beim Endladevorgang des Kondensators 23 für die Starterregung der Kondensator 43 über die Diode 42 aufgeladen, wodurch Energie zur Ansteuerung des FET 24 zur Verfügung steht. Der Bremsstrom I_{B} fließt somit über den leitenden FET 24, während ein minimaler Strom über die Feldwicklung 12 fließt. Ab einem bestimmten Stromwert, der den Stromsollwert entspricht, wird der Spannungsabfall über dem Strommeßwiderstand 25 so groß, daß der Komparator 38 schaltet. Dieser Schaltzeitpunkt kann durch geeignete Wahl der Widerstände 39, 40 festgelegt werden. Beim Schalten des Komparators 38 sperrt der Transistor 34 und damit der FET 24. Der Bremsstrom muß nun über die zweite Feldwicklung 12 fließen, wodurch das Bremsfeld der ersten Feldwicklung 11 durch die zweite Feldwicklung 12 geschwächt wird. Dadurch sinkt der Bremsstrom I_{B} wieder ab. Wird der Strom sollwert dann wieder unterschritten, so schaltet der Komparator 38 wieder zurück, der Transistor 34 wird stromleitend und steuert den FET 24 wieder in den stromleitenden Zustand. Durch dieses Wechselspiel wird der Bremsstrom I_{B} auf den gewünschten Sollwert nach Art einer Zeipunktregelung begrenzt.

Die kontinuierliche Erzeugung der Versorgungsspannung Us erfolgt mittels des Kondensators 43. Sperrt der FET 24, während sich der Bremsstrom I_{B} abbaut, so wird die Spannungsversorgung durch die im Kondensator 43 zwischengespeicherte Energie aufrechterhalten. Aus der Kondensatorspannung wird mittels der Z-Diode 44 die konstante Versorgungsspannung Us gebildet. Um den Kondensator 43 öfters bzw. gezielt nachzuladen, wird der Transistor 34 durch den Impulsgenerator 41 mit schmalen Impulsen von verhältnismäßig großer Periodendauer getaktet, was eine entsprechende Taktung des FET 24 nach sich zieht. Die Impulsbreite dieser schmalen Impulse und die große Periodendauer sind so bemessen, daß der eigentliche Regelvorgang durch diese Taktung nicht beeinträchtigt wird.

## Patentansprüche

1. Bremseinrichtung für einen Reihenschluß-Kommutatormotor, mit einem Anker (10) und zwei im Motorbetrieb von einer Versorgungsspannung beaufschlagten in Reihe dazu geschalteten Feldwicklungen (11, 12), mit einer Umschalteinrichtung (15, 16) für den Bremsbetrieb, in dem die erste Feldwicklung (11) im umgepolten Zustand mit dem Anker (10) verbunden und von der Versorgungsspannung abgetrennt ist, wobei ein die zweite Feldwicklung (12) enthaltender Teilbereich (19) des Bremsstromkreises durch einen Überbrückungszweig (22) überbrückt ist, und wobei wenigstens ein steuerbarer Widerstand (18, 21; 24) zur Begrenzung des Bremsstroms in diesen Teilbereich (19) und/oder den Überbrückungszweig (22) geschaltet ist, dadurch gekennzeichnet, daß die zweite, nicht umgepolte Feldwicklung (12) mit der umgepolten Feldwicklung (11) und dem Anker (10) einen geschlossenen Bremsstromkreis bildet, daß eine als in den Bremsstromkreis geschalteter Meßwiderstand ausgebildete Strommeßeinrichtung (25) für den Ankerstrom im Bremsbetrieb vorgesehen ist, deren Meßsignal einer auf den wenigstens einen steuerbaren Widerstand (18, 21; 24) einwirkenden Strombegrenzungseinrichtung (26; 33) zugeführt ist, die zur Strombegrenzung den Widerstandswert im Überbrückungszweig (22) erhöht und/oder den Widerstandswert im die zweite Feldwicklung (12) enthaltenden parallelen Teilbereich (19) verringert.

2. Bremseinrichtung nach Anspruch 1, dadurch gekennzeichnet, daß die Strombegrenzungseinrichtung (26; 33) als Stromregelvorrichtung ausgebildet ist.

3. Bremseinrichtung nach Anspruch 1 oder 2, dadurch gekennzeichnet, daß die Strombegrenzungseinrichtung (26; 33) eine Vergleichseinrichtung (30; 38) zum Vergleich des Bremsstroms mit einem Sollwert aufweist.

4. Bremseinrichtung nach einem der vorhergehenden Ansprüche, dadurch gekennzeichnet, daß ein im Motorbetrieb über wenigstens eine Ladediode (17, 20) ladbarer und im Bremsbetrieb zur Starterregung über wenigstens die erste Feldwicklung (11) entladbarer Kondensator (23) vorgesehen ist, der insbesondere den Anker (10) und wenigstens einen Teil des Überbrückungszweigs (22) überbrückt.

5. Bremseinrichtung nach einem der vorhergehenden Ansprüche, dadurch gekennzeichnet, daß der steuerbare Widerstand (24) nur im Überbrückungszweig (22) angeordnet ist.

6. Bremseinrichtung nach Anspruch 4 oder 5, dadurch gekennzeichnet, daß eine durch den Kondensator (23) und/oder den Bremsstrom I_{B} gespeiste Spannungsquelle (42 - 45) für die Strombegrenzungseinrichtung (33) vorgesehen ist.

7. Bremseinrichtung nach Anspruch 6, dadurch gekennzeichnet, daß die Spannungsquelle eingangsseitig durch die an der Reihenschaltung von Strommeßeinrichtung (25) und steuerbarem Widerstand (24) abgegriffenen Spannung beaufschlagt ist und einen Kondensator (43) enthält, der insbesondere in Reihe zu einer Ladediode (42) geschaltet ist, wobei der steuerbare Widerstand (24) insbesondere zum periodischen Aufladen des Kondensators (43) der Spannungsquelle mit die eigentliche Stromregelung kaum beeinträchtigenden Impulsen getaktet wird.

8. Bremseinrichtung nach Anspruch 6 oder 7, dadurch gekennzeichnet, daß die Spannungsquelle einen parallel zu ihrem Kondensator (43) geschaltete Reihenschaltung einer Z-Diode (44) mit einem Widerstand (45) aufweist.

9. Bremseinrichtung nach einem der vorhergehenden Ansprüche, dadurch gekennzeichnet, daß der wenigstens eine steuerbare Widerstand (18, 21; 24) als Transistor, insbesondere als FET ausgebildet ist.

10. Bremseinrichtung nach einem der vorhergehenden Ansprüche, dadurch gekennzeichnet, daß im Überbrückungszweig (22) und im dazu parallelen Teilbereich (19) des Bremsstromkreises jeweils eine Diode (20, 17) geschaltet ist.

11. Bremseinrichtung nach einem der vorhergehenden Ansprüche, dadurch gekennzeichnet, daß die Umschalteinrichtung aus zwei Umschaltern (15, 16) an den beiden Anschlüssen der ersten Feldwicklung (11) besteht.

## Claims

1. Braking device for a series commutator motor, with an armature (10) and two field windings (11, 12) supplied in motor operation by a supply voltage and connected in series, with a change-over unit (15, 16) for braking, in which the first field winding (11) when in reversed polarity is connected to the armature (10) and isolated from the supply voltage, while a section (19) of the brake circuit containing the second field winding (12) is bridged by a bypass branch (22), and wherein at least one controllable resistor (18, 21; 24) to limit the braking current is connected in this section (19) and/or the bypass branch (22), characterized in that the second field winding (12) without reversed polarity forms together with the reversed-polarity field winding (11) and the armature (10) a self-contained braking circuit, that a current measuring device (25) in the form of a measuring resistor connected in the braking circuit is provided for the armature current in braking mode, with a measuring signal which is fed to a current limiting device (26; 33) acting on the one or more controllable resistors (18, 21; 24) and which for current limitation purposes increases the resistance value in the bypass branch (22) and/or reduces the resistance value in the parallel section (19) containing the second field winding (12).

2. Braking device according to claim 1, characterized in that the current limiting device (26; 33) is in the form of a current regulator.

3. Braking device according to claim 1 or 2, characterized in that the current limiting device (26; 33) has a comparator unit (30; 38) for comparing the braking current with a set value.

4. Braking device according to any of the preceding claims, characterized in that a capacitor (23), chargeable in motor operation via one or more charging diodes (17, 20) and dischargeable in braking mode via at least the first field winding (11), is provided and bridges in particular the armature (10) and at least part of the bypass branch (22).

5. Braking device according to any of the preceding claims, characterized in that the controllable resistor (24) is located only in the bypass branch (22).

6. Braking device according to claim 4 or 5, characterized in that a voltage source (42 - 45) fed via the capacitor (23) and/or the braking current I_{B} is provided for the current limiting device (33).

7. Braking device according to claim 6, characterized in that the voltage source is supplied on the input side by the voltage tapped at the series connection of current measuring device (25) and controllable resistor (24), and contains a capacitor (43) connected in particular in series to a charging diode (42), while the controllable resistor (24) is timed in particular for periodic charging of the capacitor (43) of the voltage source with pulses which scarcely affect the actual current regulation.

8. Braking device according to claim 6 or 7, characterized in that the voltage source has a series connection of a Z-diode (44) and a resistor (45) connected in parallel to its capacitor (43).

9. Braking device according to any of the preceding claims, characterized in that the one or more controllable resistors (18, 21; 24) are in the form of transistors, in particular FETs.

10. Braking device according to any of the preceding claims, characterized in that in each case a diode (20, 17) is connected in the bypass branch (22) and in the parallel section (19) of the braking circuit.

11. Braking device according to any of the preceding claims, characterized in that the change-over unit consists of two change-over switches (15, 16) at the two connections of the first field winding (11).

## Revendications

1. Dispositif de freinage pour un moteur électrique à collecteur en série comportant un induit (10) et deux enroulements inducteurs (11, 12), montés en série avec celui-ci et recevant une tension d'alimentation pendant le fonctionnement du moteur, comportant un dispositif de commutation (15, 16) pour le fonctionnement en freinage, dans lequel le premier enroulement inducteur (11), dans l'état à polarité inversée, est relié à l'induit (10) et est séparé de la tension d'alimentation, une zone partielle (19) du circuit de freinage, contenant le deuxième enroulement inducteur (12), étant court-circuité par une branche de dérivation (22), et au moins une résistance commandable (18, 21 ; 24) étant montée dans cette zone partielle (19) et/ou la branche de dérivation (22), pour limiter le courant de freinage, caractérisé en ce que le deuxième enroulement inducteur (12), de polarité non inversée, forme avec l'enroulement inducteur (11) de polarité inversée et l'induit (10), un circuit de freinage fermé, en ce qu'il est prévu un dispositif de mesure de courant (25), conformé en résistance de mesure montée dans le circuit de freinage, pour le courant d'induit pendant le fonctionnement en freinage, dont le signal de mesure est envoyé à un dispositif de limitation de courant (26 ; 33), agissant sur la ou les résistances commandables (18, 21 ; 24), qui, en vue de la limitation du courant, augmente la valeur de la résistance dans la branche de dérivation (22) et/ou réduit la valeur de la résistance dans la zone partielle (19) parallèle, contenant le deuxième enroulement inducteur (12).

2. Dispositif de freinage selon la revendication 1, caractérisé en ce que le dispositif de limitation de courant (26 ; 33) est conformé en dispositif de régulation de courant.

3. Dispositif de freinage selon la revendication 1 ou 2, caractérisé en ce que le dispositif de limitation de courant (26 ; 33) comporte un dispositif de comparaison (30 ; 38) pour la comparaison du courant de freinage à une valeur de consigne.

4. Dispositif de freinage selon l'une des revendications précédentes, caractérisé en ce qu'il est prévu un condensateur (23) pouvant être chargé, pendant le fonctionnement du moteur, par au moins une diode de charge (17, 20) et pouvant être déchargé pendant le fonctionnement en freinage pour l'excitation au démarrage, par au moins le premier enroulement inducteur (11), lequel condensateur court-circuite en particulier l'induit (10) et au moins une partie de la branche de dérivation (22).

5. Dispositif de freinage selon l'une des revendications précédentes, caractérisé en ce que la résistance commandable (24) n'est montée que dans la branche de dérivation (22).

6. Dispositif de freinage selon la revendication 4 ou 5, caractérisé en ce qu'il est prévu une source de tension (42 à 45), alimentée par le condensateur (23) et/ou le courant de freinage I_{B}, pour le dispositif de limitation de courant (33).

7. Dispositif de freinage selon la revendication 6, caractérisé en ce que la source de tension reçoit côté entrée la tension, prélevée sur le montage en série du dispositif de mesure de courant (25) et de la résistance commandable (24) et contient un condensateur (43), qui est monté en particulier en série avec une diode de charge (42), la résistance commandable (24) étant synchronisée avec des impulsions, ne gênant pratiquement pas la régulation proprement dite du courant, en particulier pour la charge périodique du condensateur (43) de la source de tension.

8. Dispositif de freinage selon la revendication 6 ou 7, caractérisé en ce que la source de tension comporte un montage en série, monté parallèlement à son condensateur (43), d'une diode Zener (44) et d'une résistance (45).

9. Dispositif de freinage selon l'une des revendications précédentes, caractérisé en ce que la ou les résistances commandables (18, 21 ; 24) est ou sont conformées en transistors, en particulier en tant que FET.

10. Dispositif de freinage selon l'une des revendications précédentes, caractérisé en ce qu'une diode (20, 17) est montée dans la branche de dérivation (22) et dans la zone partielle (19) parallèle à celle-ci du circuit de freinage.

11. Dispositif de freinage selon l'une des revendications précédentes, caractérisé en ce que le dispositif de commutation est constitué de deux commutateurs (15, 16) prévus aux deux bornes du premier enroulement inducteur (11).
